# EUROPÄISCHE PATENTSCHRIFT

(11) **EP 1 749 149 B1**
(45) Veröffentlichungstag und Bekanntmachung des Hinweises auf die Patenterteilung: **07.05.2008**
(21) Anmeldenummer: 05717159.7
(22) Anmeldetag: 30.03.2005
(51) Int. Cl.: F02D 41/34, F02D 41/14

(54) **VERFAHREN ZUM ERFASSEN EINES ZYLINDERINDIVIDUELLEN LUFT/KRAFTSTOFF-VERHÄLTNISSES BEI EINER BRENNKRAFTMASCHINE**
METHOD FOR DETECTING A CYLINDER-INDIVIDUAL AIR/FUEL RATIO IN AN INTERNAL COMBUSTION ENGINE
PROCEDE POUR DETECTER UN RAPPORT AIR/CARBURANT, SPECIFIQUE A CHAQUE CYLINDRE, DANS UN MOTEUR A COMBUSTION INTERNE

(30) Priorität: 28.05.2004 DE 102004026176
(43) Veröffentlichungstag der Anmeldung: 07.02.2007
(73) Patentinhaber: VDO Automotive AG, 93055 Regensburg (DE)
(72) Erfinder: ZHANG, Hong, 93105 Tegernheim (DE)
(86) Internationale Anmeldenummer: PCT/EP2005/051427
(87) Internationale Veröffentlichungsnummer: WO 2005/116433

(56) Entgegenhaltungen:
- EP-A- 0 643 213
- DE-C1- 19 903 721
- US-A1- 2002 026 930
- BUSH K J ET AL: "AUTOMATIC CONTROL OF CYLINDER BY CYLINDER AIR-FUEL MIXTURE USING A PROPORTIONAL EXHAUST GAS SENSOR" SAE TRANSACTIONS, JOURNAL OF ENGINES, WARRENDALE, PA, US, Bd. 103, 1994, Seiten 73-86, XP000858036

## Beschreibung

Die Erfindung betrifft ein Verfahren zum Erfassen eines zylinderindividuellen Luft/Kraftstoff-Verhältnisses bei einer Brennkraftmaschine mit mehreren Zylindern und den Zylindern zugeordneten Einspritzventilen, die Kraftstoff zumessen. Eine Abgassonde ist in einem Abgastrakt angeordnet und ihr Messsignal ist charakteristisch für das Luft/Kraftstoff-Verhältnis in dem jeweiligen Zylinder.

Immer strengere gesetzliche Vorschriften bezüglich zulässiger Schadstoffemissionen von Kraftfahrzeugen, in denen Brennkraftmaschinen angeordnet sind, machen es erforderlich, die Schadstoffemissionen beim Betrieb der Brennkraftmaschine so gering wie möglich zu halten. Dies kann zum einen erfolgen, indem die Schadstoffemissionen verringert werden, die während der Verbrennung des Luft/Kraftstoff-Gemisches in dem jeweiligen Zylinder der Brennkraftmaschine entstehen. Zum andern sind in Brennkraftmaschinen Abgasnachbehandlungssysteme im Einsatz, die die Schadstoffemissionen, die während des Verbrennungsprozesses des Luft/Kraftstoff-Gemisches in den jeweiligen Zylindern erzeugt werden, in unschädliche Stoffe umwandeln. Zu diesem Zweck werden Abgaskatalysatoren eingesetzt, die Kohlenmonoxid, Kohlenwasserstoffe und Stickoxide in unschädliche Stoffe umwandeln. Sowohl das gezielte Beeinflussen des Erzeugens der Schadstoffemissionen während der Verbrennung als auch das Umwandeln der Schadstoffkomponenten mit einem hohen Wirkungsgrad durch einen Abgaskatalysator setzen ein sehr präzise eingestelltes Luft/Kraftstoff-Verhältnis in dem jeweiligen Zylinder voraus.

Aus der DE 199 03 721 C1 ist ein Verfahren für eine Brennkraftmaschine mit mehreren Zylindern zur zylinderselektiven Regelung eines zu verbrennenden Luft/Kraftstoff-Gemisches bekannt, bei dem die Lambdawerte für verschiedene Zylinder oder Zylindergruppen getrennt sensiert und geregelt werden. Dazu ist eine Sonden-Auswerteeinheit vorgesehen, in der eine zeitaufgelöste Auswertung des Abgassondensignals erfolgt und so ein zylinderselektiver Lambdawert für jeden Zylinder der Brennkraftmaschine ermittelt wird. Jedem Zylinder ist ein einzelner Regler zugeordnet, der als PI- oder PID-Regler ausgebildet ist, dessen Regelgröße ein zylinderindividueller Lambdawert ist und dessen Führungsgröße ein zylinderindividueller Sollwert des Lambdas ist. Die Stellgröße des jeweiligen Reglers beeinflusst dann die Einspritzung des Kraftstoffs in dem jeweils zugeordneten Zylinder.

Die Güte der zylinderindividuellen Lambdaregelung hängt maßgeblich davon ab, wie präzise das zu dem jeweiligen Abtastzeitpunkt erfasste Messsignal der Abgassonde dem Abgas des jeweiligen Zylinders zugeordnet ist.

Aus der EP 0 643 213 A1 ist eine Brennkraftmaschine mit mehreren Zylindern und den Zylindern zugeordneten Einspritzventilen bekannt. Eine Abgassonde ist in einem Abgastrakt angeordnet und ihr Messsignal ist charakteristisch für das Luft/Kraftstoff-Verhältnis in den jeweiligen Zylindern. Die Abgassonde erzeugt ein Messsignal, das mittels eines A/D-Wandlers in digitale Werte gewandelt wird und in einem Puffer gespeichert wird. Zum Zuordnen des jeweiligen Kraftstoffverhältnisses zu dem jeweiligen Zylinder wird der jeweilige auszulesende Pufferwert abhängig davon ermittelt, ob ein gewünschtes Luft/Kraftstoff-Verhältnis magerer ist als das stöchiometrische Luft/Kraftstoff-Verhältnis. Gemäß einer weiteren Ausführungsform wird der auszulesende Pufferwert abhängig von dem atmosphärischen Druck ermittelt.

Aus der US 2002/0026930 A1 ist es bekannt ein Messsignal einer Abgassonde abzutasten und aus den Abtastwerten einen auszuwählen abhängig von der Motordrehzahl, der Motorlast und einem ausgewähltem Betriebsmodus, der beispielsweise ein stöchiometrischer Betrieb ein Vormischungsverbrennungsbetrieb und ein Schichtbetrieb sein kann.

Die Aufgabe der Erfindung ist es, ein Verfahren zu schaffen, das ein präzises Erfassen des dem jeweiligen Zylinder einer Brennkraftmaschine zuzuordnenden Luft/Kraftstoff-Verhältnisses einfach ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren zum Erfassen eines zylinderindividuellen Luft/Kraftstoff-Verhältnisses bei einer Brennkraftmaschine mit mehreren Zylindern und den Zylindern zugeordneten Einspritzventilen, die Kraftstoff zumessen, wobei eine Abgassonde in einem Abgastrakt angeordnet ist und ihr Messsignal charakteristisch ist für das Luft/Kraftstoff-Verhältnis in dem jeweiligen Zylinder. Ein Abtast-Kurbelwellenwinkel bezogen auf eine Bezugsposition des Kolbens des jeweiligen Zylinders wird zum Erfassen des Messsignals ermittelt abhängig von einem Öffnungsgrad eines Bypassventils eines Bypasses zu einer Turbine, die in dem Abgastrakt angeordnet ist. Wenn der Kurbelwellenwinkel den Abtast-Kurbelwellenwinkel erreicht, wird das Messsignal erfasst und dem jeweiligen Zylinder zugeordnet. Selbstverständlich können der Kurbelwellenwinkel und der Abtast-Kurbelwellenwinkel auch gleichwirkend als ein entsprechendes Zeitsignal ausgedrückt sein.

Die Erfindung nutzt auf einfache Weise die Erkenntnis, dass die Ansprechzeit der Abgassonde abhängt von dem auf sie einwirkenden absoluten Druck. Der auf die Abgassonde einwirkende absolute Druck ist der in dem Abgastrakt im Bereich der Abgassonde herrschende Abgasgegendruck. Sie macht sich dabei zu eigen, dass der Abgasgegendruck durch den Öffnungsgrad des Bypassventil maßgeblich beeinflusst wird. Die Ansprechzeit der Abgassonde wird aufgrund einer druckabhängigen Diffusion der Sauerstoffmoleküle in einer entsprechenden Kammer der Abgassonde beeinflusst.

Gemäß einer vorteilhaften Ausgestaltung der Erfindung wird der Abtast-Kurbelwellenwinkel bezogen auf eine Bezugsposition des Kolbens des jeweiligen Zylinders zum Erfassen des Messsignals ermittelt abhängig von einem Umgebungsdruck. Dabei wird insbesondere die Erkenntnis genutzt, dass insbesondere bei gleichem Lastzustand der Brennkraftmaschine der Abgasgegendruck abhängt von dem Umgebungsdruck, also dem Druck, in dem die Brennkraftmaschine umgebenden Bereich herrscht.

Gemäß einer weiteren vorteilhaften Ausgestaltung der Erfindung wird der Abtast-Kurbelwellenwinkel ermittelt abhängig von einer das Luft/Kraftstoff-Verhältnis in dem jeweiligen Zylinder charakterisierenden Größe. Auf diese Weise kann die Dynamik der Abgassonde besonders günstig berücksichtig werden, da sie abhängt von dem Luft/Kraftstoff-Verhältnis in dem jeweiligen Zylinder.

In diesem Zusammenhang ist es besonders vorteilhaft, wenn der Abtast-Kurbelwellenwinkel ermittelt wird abhängig davon, ob das Luft/Kraftstoff-Verhältnis in dem jeweiligen Zylinder in etwa dem stöchiometrischen Luft/Kraftstoff-Verhältnis entspricht oder nicht. Dabei wird die Erkenntnis genutzt, dass sich die Dynamik der Abgassonde wesentlich abhängig davon unterscheidet, ob das Luft/Kraftstoff-Verhältnis in dem jeweiligen Zylinder in etwa dem stöchiometrischen Luft/Kraftstoff-Verhältnis entspricht oder entsprechend über- oder unterstöchiometrisch ist. Es hat sich insbesondere gezeigt, dass dieser enge Bereich um das stöchiometrische Luft/Kraftstoff-Verhältnis in etwa im Bereich von λ = 0,97 bis 1,03 liegt. Es hat sich ferner gezeigt, dass diese veränderte Dynamik in dem engen Fenster um das stöchiometrische Luft/Kraftstoff-Verhältnis in dem jeweiligen Zylinder auf Umladevorgängen in einer Kammer der linearen Lambdasonde beruht, und zwar insbesondere auf einer veränderten Verteilung des Sauerstoffs in der Kammer.

Ausführungsbeispiele der Erfindung sind im folgenden anhand der schematischen Zeichnungen erläutert. Es zeigen:
- Figur 1: eine Brennkraftmaschine mit einer Steuereinrichtung,
- Figur 2: ein Blockschaltbild der Steuereinrichtung,
- Figur 3: ein Ablaufdiagramm einer ersten Ausführungsform eines Programms zum Ermitteln eines Abtast-Kurbelwellenwinkels,
- Figur 4: ein Ablaufdiagramm einer zweiten Ausführungsform des Programms zum Ermitteln eines Abtast-Kurbelwellenwinkels,
- Figur 5: ein Ablaufdiagramm einer dritten Ausführungsform des Programms zum Ermitteln eines Abtast-Kurbelwellenwinkels,
- Figur 6: ein Ablaufdiagramm einer vierten Ausführungsform des Programms zum Ermitteln eines Abtast-Kurbelwellenwinkels,
- Figur 7: ein Ablaufdiagramm einer fünften Ausführungsform des Programms zum Ermitteln eines Abtast-Kurbelwellenwinkels.

Elemente gleicher Konstruktion und Funktion sind figurenübergreifend mit den gleichen Bezugszeichen gekennzeichnet.

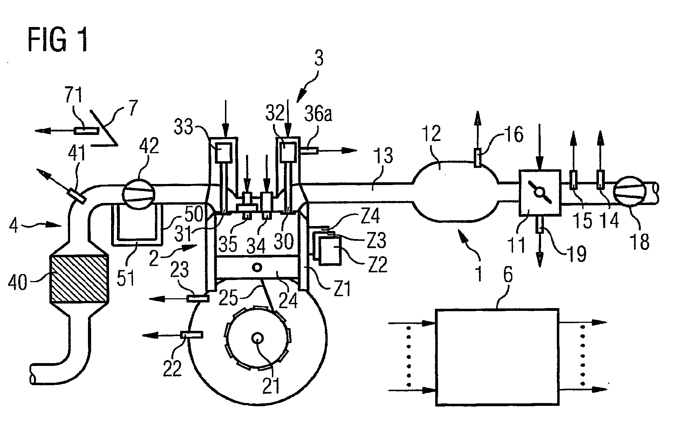

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 11, ferner einen Sammler 12 und ein Saugrohr 13, das hin zu einem Zylinder Z1 über einen Einlasskanal in den Motorblock 2 geführt ist. Der Motorblock 2 umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Gaseinlassventil 30, einem Gasauslassventil 31 und Ventilantrieben 32, 33. Der Zylinderkopf 3 umfasst ferner ein Einspritzventil 34 und eine Zündkerze 35. Alternativ kann das Einspritzventil auch in dem Saugrohr 13 angeordnet sein.

Der Abgastrakt 4 umfasst einen Abgaskatalysator 40, der bevorzugt als Dreiwegekatalysator ausgebildet ist. Ferner kann ein Abgasturbolader vorgesehen sein, der eine Turbine 42, die in dem Abgastrakt 4 angeordnet ist, einen Bypasskanal 50 zu der Turbine 42 mit einem Bypassventil 51 und einen Verdichter 18 umfasst, der in dem Ansaugtrakt 1 angeordnet ist.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 steuert abhängig von mindestens einer der Messgrößen die Stellglieder mittels entsprechender Stellantriebe an.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Drucksensor 16, welcher den Saugrohrdruck erfasst, ein Kurbelwellenwinkelsensor 22, welcher einen Kurbelwellenwinkel erfasst, dem dann eine Drehzahl N zugeordnet wird, ein weiterer Temperatursensor 23, welcher eine Kühlmitteltemperatur erfasst, ein Drosselklappensensor 19, welcher den Öffnungsgrad der Drosselklappe 11 erfasst, und eine Abgassonde 41 welche einen Restsauerstoffgehalt des Abgases erfasst und deren Messsignal charakteristisch ist für das Luft/Kraftstoff-Verhältnis in dem Zylinder Z1. Die Abgassonde 41 ist bevorzugt als lineare Lambdasonde ausgebildet und erzeugt so über einen weiten Bereich des Luft/Kraftstoff-Verhältnisses ein zu diesem proportionales Messsignal.

Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30, 31, das Einspritzventil 34,die Zündkerze 35 oder das Bypass-Ventil 51.

Neben dem Zylinder Z1 sind auch noch weitere Zylinder Z2-Z4 vorgesehen, denen dann auch entsprechende Stellglieder zugeordnet sind. So kann die Brennkraftmaschine beispielsweise sechs Zylinder umfassen, wobei jeweils drei Zylinder einer Abgasbank zugeordnet sind. Bevorzugt ist jeder Abgasbank eine Abgassonde 41 zugeordnet.

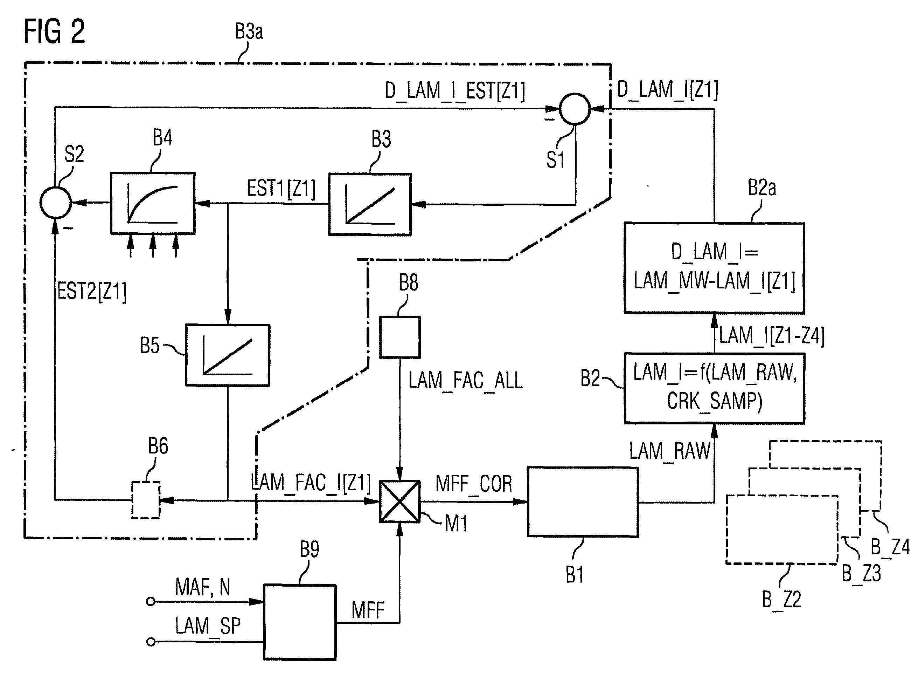

Ein Blockschaltbild von Teilen der Steuereinrichtung 6, die auch als Vorrichtung zum Steuern der Brennkraftmaschine bezeichnet werden kann, ist anhand der Figur 2 dargestellt.

Ein Block B1 entspricht der Brennkraftmaschine. Einem Block B2 wird ein von der Abgassonde 41 erfasstes Luft/Kraftstoff-Verhältnis LAM_RAW zugeleitet. Zu jeweils ermittelten Abtast-Kurbelwellenwinkeln CRK_SAMP bezogen auf eine Bezugsposition des jeweiligen Kolbens des jeweiligen Zylinders Z1 bis Z4 erfolgt dann in dem Block B2 eine Zuordnung des in diesem Zeitpunkt jeweils aktuellen erfassten Luft/Kraftstoff-Verhältnisses, das aus dem Messsignal der Abgassonde 41 abgeleitet wird, zu dem jeweiligen Luft/Kraftstoff-Verhältnis des jeweiligen Zylinders Z1 bis Z4 und so wird das zylinderindividuell erfasste Luft/Kraftstoff-Verhältnis LAM_I [Z1-Z4] zugeordnet.

Die Bezugsposition des jeweiligen Kolbens 24 ist bevorzugt sein oberer Totpunkt. Das Ermitteln des Abtast-Kurbelwellenwinkels CRK_SAMP wird im folgenden anhand der weiter unten beschriebenen Programme näher erläutert.

In einem Block B2a wird ein mittleres Luft/Kraftstoff-Verhältnis LAM_MW durch Mittelung der zylinderindividuell erfassten Luft/Kraftstoff-Verhältnisse LAM_I [Z1-Z4] ermittelt. Ferner wird in dem Block B2a ein Istwert D_LAM_I [Z1] einer zylinderindividuellen Luft/Kraftstoff-Verhältnis Abweichung aus der Differenz des mittleren Luft/Kraftstoff-Verhältnisses LAM_MW und des zylinderindividuell erfassten Luft/Kraftstoff-Verhältnisses LAM_I [Z1] ermittelt. Diese wird dann einem Regler zugeführt, der durch den Block B3a gebildet ist.

In einer Summierstelle S1 wird die Differenz aus dem Istwert D_LAM_I [Z1] und eines Schätzwertes D_LAM_I_EST [Z1] der zylinderindividuellen Luft/Kraftstoff-Verhältnis Abweichung ermittelt und dann einem Block B3 zugeordnet, der Teil eines Beobachters ist und ein Integrierglied umfasst, das die an seinem Eingang anliegende Größe integriert. Das I-Glied des Blocks B3 stellt dann an seinem Ausgang einen ersten Schätzwert EST1 [Z1] zur Verfügung.

Der erste Schätzwert EST1[Z1] wird dann zum einen einem auch Bestandteil des Beobachters bildenden Verzögerungsglied zugeführt, das in dem Block B4 ausgebildet ist. Das Verzögerungsglied ist bevorzugt als PT1-Glied ausgebildet. Gegebenenfalls werden dem Verzögerungsglied auch noch die jeweils ersten Schätzwerte EST1[Z2-Z4] bezogen auf die weiteren Zylinder [Z2-Z4] zugeführt. Der erste Schätzwert EST1[Z1] bildet eine Zustandsgröße des Beobachters.

Der erste Schätzwert EST1[Z1] wird ferner einem Block B5 zugeführt, in dem ein weiteres Integratorglied ausgebildet ist, das den ersten Schätzwert EST1[Z1] integriert und als Stellgröße des Reglers dann an seinem Ausgang einen zylinderindividuellen Lambdaregelfaktor LAM_FAC_I [Z1] erzeugt.

In einem Block B6 wird abhängig von dem zylinderindividuellen Lambdaregelfaktor LAM_FAC_I [Z1] ein zweiter Schätzwert EST2 [Z1] ermittelt. Dies erfolgt besonderes einfach durch Gleichsetzen des zweiten Schätzwertes EST2 [Z1] mit dem zylinderindividuellen Lambdaregelfaktor LAM_FAC_I [Z1]. In der Summierstelle S2 wird dann die Differenz des über das Verzögerungsglied des Blockes B4 gefilterten ersten Schätzwertes EST1 [Z1] und des zweiten Schätzwertes EST2 [Z1] gebildet und als Schätzwert D_LAM_I_EST [Z1] der zylinderindividuellen Luft/Kraftstoff-Verhältnisabweichung zur Summierstelle S1 zurückgeführt und hier von dem Istwert D_LAM_I [Z1] der jeweiligen zylinderindividuellen Luft/Kraftstoff-Verhältnisabweichung subtrahiert und so rückgekoppelt und dann wieder dem Block B3 eingespeist.

In einem Block B8 ist ein Lambdaregler vorgesehen, dessen Führungsgröße ein für alle Zylinder der Brennkraftmaschine vorgegebenes Luft/Kraftstoff-Verhältnis ist und dessen Regelgröße das mittlere Luft/Kraftstoff-Verhältnis LAM_MW ist. Die Stellgröße des Lambdareglers ist ein Lambdaregelfaktor LAM_FAC_ALL. Der Lambdaregler hat somit die Aufgabe, dass betrachtet über alle Zylinder Z1 bis Z4 der Brennkraftmaschine, das vorgegebene Luft/Kraftstoff-Verhältnis eingestellt wird.

Alternativ kann dies auch dadurch erreicht werden, dass in dem Block B2 der Istwert D_LAM_I der zylinderindividuellen Luft/Kraftstoff-Verhältnis Abweichung aus der Differenz des für alle Zylinder Z1 bis Z4 der Brennkraftmaschine vorgegebenen Luft/Kraftstoff-Verhältnisses und des zylinderindividuellen Luft/Kraftstoff-Verhältnisses LAM_I[Z1-Z4] ermittelt wird. In diesem Fall kann dann der dritte Regler des Blocks B8 entfallen.

In einem Block B9 wird eine zuzumessende Kraftstoffmasse MFF abhängig von einem Luftmassenstrom MAF in den jeweiligen Zylinder Z1 bis Z4 und gegebenenfalls der Drehzahl N und einem Sollwert LAM_SP des Luft/Kraftstoff-Verhältnisses für alle Zylinder Z1-Z4 ermittelt.

In der Multiplizierstelle M1 wird eine korrigierte zuzumessende Kraftstoffmasse MFF_COR durch Multiplizieren der zuzumessenden Kraftstoffmasse MFF, des Lambdaregelfaktors LAM_FAC_ALL und des zylinderindividuellen Lambdaregelfaktors LAM_FAC_I[Z1] ermittelt. Abhängig von der korrigierten zuzumessenden Kraftstoffmasse MFF_COR wird dann ein Stellsignal erzeugt, mit dem das jeweilige Einspritzventil 34 angesteuert wird.

Neben der in dem Blockschaltbild der Figur 2 dargestellten Reglerstruktur sind für jeden weiteren Zylinder Z1 bis Z4 entsprechende Reglerstrukturen B_Z2 bis B_Z4 für die jeweiligen weiteren Zylinder Z2 bis Z4 vorgesehen.

Alternativ kann in dem Block B5 auch ein Proportionalglied ausgebildet sein.

Mehrere Ausführungsbeispiele von Programmen zum Ermitteln des Abtast-Kurbelwellenwinkels CRK_SAMP werden im folgenden beschrieben. Der Start der jeweiligen Programme erfolgt bevorzugt zeitnah zu einem Start der Brennkraftmaschine.

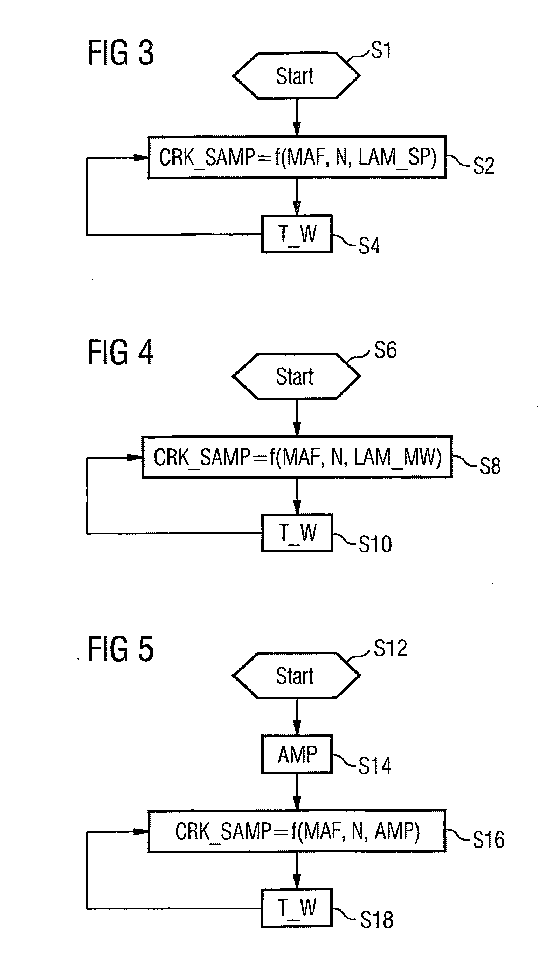

Die Ausführungsformen des Programms gemäß der Figuren 3, 4 und 5 dienen lediglich zur Erläuterung des Hintergrunds der Ausführungsbeispiele der Erfindung. Sie stellen jedoch selbst keine Ausführungsbeispiele der Erfindung dar.

Eine erste Ausführungsform des Programms (Figur 3) wird in einem Schritt S1 gestartet. In einem Schritt S2 wird der Abtast-Kurbelwellenwinkel CRK_SAMP abhängig von dem Luftmassenstrom MAF in den jeweiligen Zylinder, der Drehzahl N und dem Sollwert LAM_SP des Luft/Kraftstoff-Verhältnisses ermittelt. Der so ermittelte Wert des Abtast-Kurbelwellenwinkels CRK_SAMP wird dann dem Block B2 zur weiteren Verarbeitung zur Verfügung gestellt. Anschließend verharrt das Programm für eine vorgebbare Wartezeitdauer T_W in dem Schritt S4, bevor der Schritt S2 erneut abgearbeitet wird. Alternativ kann das Programm in dem Schritt S4 auch für eine vorgegebene Kurbelwellenwinkeldauer verharren. Bevorzugt wird in dem Schritt S2 zunächst der Abtast-Kurbelwellenwinkel CRK_SAMP abhängig von dem Luftmassenstrom MAF in den jeweiligen Zylinder und der Drehzahl N ermittelt und anschließend mittels eines Korrekturwertes korrigiert, der abhängig von dem Sollwert LAM_SP des Luft/Kraftstoff-Verhältnisses ermittelt wird. Zu diesem Zweck sind bevorzugt in der Steuereinrichtung 6 entsprechende Kennfelder gespeichert, die vorab durch Versuche an einem Motorprüfstand oder auch Simulationen ermittelt wurden.

Bei einer zweiten Ausführungsform des Programms (Figur 4) erfolgt ein Start in einem Schritt S6. In einem Schritt S8 wird der Abtast-Kurbelwellenwinkel CRK_SAMP abhängig von dem Luftmassenstrom MAF in den jeweiligen Zylinder, der Drehzahl N und dem mittleren Luft/Kraftstoff-Verhältnis LAM_MW ermittelt. Bevorzugt wird das mittlere Luft/Kraftstoff-Verhältnis LAM_MW vor der Ermittlung des Abtast-Kurbelwellenwinkels CRK_SAMP auch mittels eines Tiefpasses gefiltert, um höherfrequente Schwankungen insbesondere in einem Bereich nahe des stöchiometrischen Luft/Kraftstoff-Verhältnisses herauszufiltern. Die Ermittlung des Abtast-Kurbelwellenwinkels CRK_SAMP erfolgt in dem Schritt S8 bevorzugt entsprechend zu der des Schrittes S2. Der Einsatz des Sollwertes LAM_SP des Luft/Kraftstoff-Verhältnisses hat den Vorteil, dass regelmäßig auf das Tiefpassfiltern verzichtet werden kann. Besonders einfach kann das Ermitteln des Abtast-Kurbelwellenwinkels CRK_SAMP auch dadurch erfolgen, dass lediglich unterschieden wird, ob das mittlere Luft/Kraftstoff-Verhältnis LAM_MW oder der Sollwert LAM_SP des Luft/Kraftstoff-Verhältnisses sich in einem engen Bereich um das stöchiometrische Luft/Kraftstoff-Verhältnis befindet oder nicht.

Eine dritte Ausführungsform des Programms zum Ermitteln des Abtast-Kurbelwellenwinkels CRK_SAMP (Figur 5) wird in einem Schritt S12 gestartet. In einem Schritt S14 wird ein Umgebungsdruck AMP erfasst oder ermittelt. Dazu kann beispielsweise ein Umgebungsdrucksensor vorgesehen sein, der den Druck außerhalb der Brennkraftmaschine erfasst und somit den aktuellen Luftdruck erfasst. Ist jedoch der Umgebungsdrucksensor nicht vorhanden, so kann einfach abhängig von dem Messsignal des Saugrohrdrucksensors 16 in vorgegebenen Betriebszuständen der Umgebungsdruck ermittelt werden. Dies ist besonders einfach dann möglich, wenn der gegebenenfalls vorhandene Verdichter 18 gerade nicht aktiv ist, das heißt nicht die Luft verdichtet und die Drosselklappe 11 soweit geöffnet ist, dass der Druckabfall über der Drosselklappe 11 vernachlässigbar ist. In diesem Fall kann abhängig von dem Messsignal des Saugrohrdrucksensors 16 ein sehr guter Nährungswert des Umgebungsdrucks AMP ermittelt werden.

In einem Schritt S16 wird dann der Abtast-Kurbelwellenwinkel CRK_SAMP abhängig von dem jeweiligen Luftmassenstrom MAF in den jeweiligen Zylinder, der Drehzahl N und dem Umgebungsdruck AMP ermittelt. Dies erfolgt bevorzugt entsprechend der Vorgehensweise des Schrittes S2.

Anschließend verharrt das Programm für die vorgegebene Wartezeitdauer T_W in dem Schritt S18.

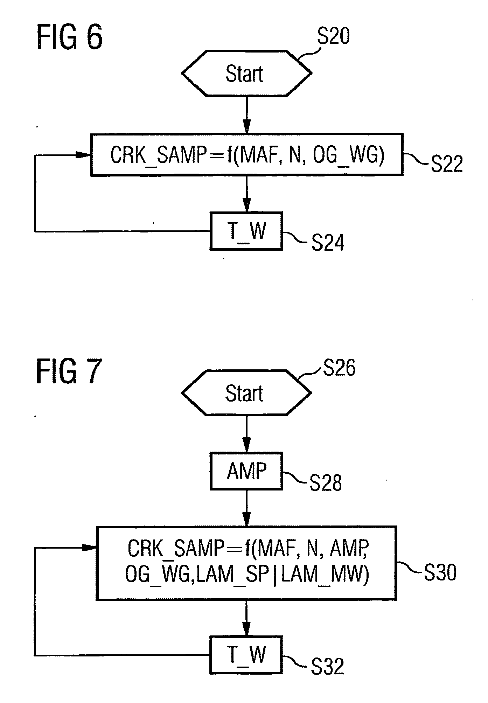

Bei einer vierten Ausführungsform des Programms zum Ermitteln des Abtast-Kurbelwellenwinkels CRK_SAMP (Figur 6) erfolgt ein Start in einem Schritt S20. In einem Schritt S22 wird der Abtast-Kurbelwellenwinkel CRK_SAMP abhängig von dem Luftmassenstrom MAF in den jeweiligen Zylinder, der Drehzahl N und dem Öffnungsgrad OG_WG des Bypassventils 51 zu der Turbine 42 des Abgasturboladers ermittelt. Dies erfolgt bevorzugt ebenfalls entsprechend zu der Vorgehensweise des Schrittes S2.

Anschließend verharrt das Programm dann in einem Schritt S24 für die vorgegebene Wartezeitdauer T_W. Anschließend wird dann die Bearbeitung erneut in dem Schritt S22 fortgesetzt.

Bei einer fünften Ausführungsform des Programms (Figur 7) erfolgt ein Start in einem Schritt S26. In einem Schritt S28 wird der Umgebungsdruck erfasst. Dies erfolgt entsprechend der Vorgehensweise des Schrittes S14.

In einem Schritt S30 wird dann der Abtast-Kurbelwellenwinkel CRK_SAMP abhängig von dem Luftmassenstrom MAF in den jeweiligen Zylinder Z1 bis Z4, der Drehzahl N, dem Umgebungsdruck AMP, dem Öffnungsgrad OG_WG des Bypassventils 51, und entweder dem Sollwert LAM_SP des Luft/Kraftstoff-Verhältnisses oder dem mittleren Luft/Kraftstoff-Verhältnis LAM_MW ermittelt.

Bevorzugt wird in dem Schritt S30 zunächst der Abtast-Kurbelwellenwinkel CRK_SAMP abhängig von dem Luftmassenstrom MAF in den jeweiligen Zylinder und der Drehzahl N, bevorzugt mittels eines Kennfeldes und gegebenenfalls entsprechender Kennfeldinterpolation ermittelt. Daneben wird mindestens ein Korrekturwert abhängig von dem Umgebungsdruck AMP und/oder dem Öffnungsgrad OG_WG des Bypassventils 51 und/oder dem Sollwert LAM_SP des Luft/Kraftstoff-Verhältnisses und/oder dem mittleren Luft/Kraftstoff-Verhältnis LAM MW ermittelt. Dies erfolgt ebenfalls bevorzugt mittels eines oder mehrerer Kennfelder und gegebenenfalls entsprechender Kennfeldinterpolation, wobei die Kennfelder bevorzugt vorab durch entsprechende Versuche, zum Beispiel an einem Motorprüfstand oder durch Simulationen, ermittelt sind.

Der Abtast-Kurbelwellenwinkel CRK_SAMP wird dann mittels mindestens einem Korrekturwertes korrigiert und dem Block B2 zur Verfügung gestellt. Im Anschluss daran verharrt das Programm für die vorgegebene Wartezeitdauer T_W in dem Schritt S32, bevor die Bearbeitung erneut in dem Schritt S30 fortgesetzt wird.

## Patentansprüche

1. Verfahren zum Erfassen eines zylinderindividuellen Luft/Kraftstoff-Verhältnisses (LAM_I) bei einer Brennkraftmaschine mit mehreren Zylindern (Z1 - Z4) und den Zylindern (Z1
- Z4) zugeordneten Einspritzventilen (34), die Kraftstoff zumessen, wobei eine Abgassonde (41) in einem Abgastrakt (4) angeordnet ist und ihr Messsignal charakteristisch ist für das Luft/Kraftstoff-Verhältnis in dem jeweiligen Zylinder, bei dem
- ein Abtast-Kurbelwellenwinkel (CRK_SAMP) bezogen auf eine Bezugsposition des Kolbens (24) des jeweiligen Zylinders (Z1
- Z4) zum Erfassen des Messsignals ermittelt wird abhängig von einem Öffnungsgrad (OG_WG) eines Bypassventils (51), eines Bypasses (50) zu einer Turbine (42), die in dem Abgastrakt (4) angeordnet ist, und
- zu dem Abtast-Kurbelwellenwinkel (CRK_SAMP) das Messsignal erfasst wird und dem jeweiligen Zylinder (Z1 - Z4) zugeordnet wird.

2. Verfahren nach Anspruch 1,
bei dem der Abtast-Kurbelwellenwinkel (CRK_SAMP) ermittelt wird abhängig von einem Umgebungsdruck (AMP).

3. Verfahren nach Anspruch 2,
bei dem der Abtast-Kurbelwellenwinkel (CRK_SAMP) ermittelt wird abhängig von einer das Luft/Kraftstoff-Verhältnis in dem jeweiligen Zylinder (Z1 - Z4) charakterisierenden Größe.

4. Verfahren nach Anspruch 3,
bei dem der Abtast-Kurbelwellenwinkel (CRK_SAMP) ermittelt wird abhängig davon, ob das Luft/Kraftstoff-Verhältnis in dem jeweiligen Zylinder (Z1 - Z4) in etwa dem stöchiometrischen Luft/Kraftstoff-Verhältnis entspricht oder nicht.

## Claims

1. Method for detecting a cylinder-specific air/fuel ratio (LAM_I) in an internal combustion engine with a number of cylinders (Z1 - Z4) and injection valves (34) assigned to the cylinders (Z1 - Z4), which meter fuel, with an exhaust gas probe (41) disposed in an exhaust gas tract (4), its measuring signal characteristic of the air/fuel ratio in the respective cylinder, wherein
- a sampled crankshaft angle (CRK_SAMP) in relation to a reference position of the piston (24) of the respective cylinder (Z1 - Z4) is determined to detect the measuring signal as a function of an opening angle (OG_WG) of a bypass valve (51), of a bypass (50) to a turbine (42), which is disposed in the exhaust gas tract (4), and
- the measuring signal is detected for the sampled crankshaft angle (CRK_SAMP) and assigned to the respective cylinder (Z1 - Z4).

2. Method according to claim 1,
wherein the sampled crankshaft angle (CRK_SAMP) is determined as a function of an ambient pressure (AMP).

3. Method according to claim 2,
wherein the sampled crankshaft angle (CRK_SAMP) is determined as a function of a variable that characterizes the air/fuel ratio in the respective cylinder (Z1 - Z4).

4. Method according to claim 3,
wherein the sampled crankshaft angle (CRK_SAMP) is determined as a function of whether or not the air/fuel ratio in the respective cylinder (Z1 - Z4) corresponds approximately to the stoichiometric air/fuel ratio.

## Revendications

1. Procédé d'acquisition d'un rapport air/carburant individuel pour chaque cylindre (LAM_I) dans le cas d'un moteur à combustion interne comportant plusieurs cylindres (Z1 à Z4) et des soupapes d'injection (34) affectées aux cylindres (Z1 à Z4), qui dosent du carburant, dans lequel une sonde de gaz d'échappement (41) est agencée dans un système d'échappement (4) et son signal de mesure est caractéristique du rapport air/carburant dans le cylindre respectif, dans lequel
- un angle de détection du vilebrequin (CRK_SAMP) par rapport à une position de référence du piston (24) du cylindre respectif (Z1 à Z4) est déterminé en vue de l'acquisition du signal de mesure en fonction d'un degré d'ouverture (OG_WG) d'une soupape de dérivation (51) d'une dérivation (50) vers une turbine (42) qui est agencée dans le système d'échappement (4), et
- à l'angle de détection du vilebrequin (CRK_SAMP), le signal de mesure est acquis et est affecté au cylindre respectif (Z1 à Z4).

2. Procédé selon la revendication 1, dans lequel l'angle de détection du vilebrequin (CRK_SAMP) est déterminé en fonction d'une pression ambiante (AMP).

3. Procédé selon la revendication 2, dans lequel l'angle de détection du vilebrequin (CRK_SAMP) est déterminé en fonction d'une grandeur caractérisant le rapport air/carburant dans le cylindre respectif (Z1 à Z4).

4. Procédé selon la revendication 3, dans lequel l'angle de détection du vilebrequin (CRK_SAMP) est déterminé en fonction de si le rapport air/carburant dans le cylindre respectif (Z1 à Z4) correspond ou non approximativement au rapport air/carburant stoechiométrique.
